# EUROPEAN PATENT SPECIFICATION

(11) **EP 3 010 138 B1**
(45) Date of publication and mention of the grant of the patent: **21.02.2018**
(21) Application number: 14810297.3
(22) Date of filing: 17.04.2014
(51) Int. Cl.: H02N 1/04, G06F 3/041, H01L 41/113

(54) **SINGLE-ELECTRODE FRICTION NANO GENERATOR, POWER GENERATION METHOD AND SELF-DRIVEN TRACKER**
EINZELELEKTRODENREIBUNGSNANOGENERATOR, STROMERZEUGUNGSVERFAHREN UND SELBSTANGETRIEBENER TRACKER
NANOGÉNÉRATEUR DE FRICTION À ÉLECTRODE UNIQUE, PROCÉDÉ DE PRODUCTION D'ÉNERGIE ET DISPOSITIF DE SUIVI AUTO-ENTRAÎNÉ

(30) Priority: 13.06.2013 CN 201310233679
(43) Date of publication of application: 20.04.2016
(73) Proprietor: Beijing Institute of Nanoenergy and Nanosystems, Beijing 100083 (CN)
(72) Inventor: WANG, Zhonglin, Beijing 100190 (CN); YANG, Ya, Beijing 100190 (CN); ZHANG, Hulin, Beijing 100190 (CN)
(74) Representative: Stiel, Jürgen
(86) International application number: PCT/CN2014/075563
(87) International publication number: WO 2014/198155

(56) References cited:
- CN-A- 102 710 166
- CN-A- 103 107 732
- CN-U- 202 818 150
- CN-U- 202 818 150
- DE-A1- 4 429 029
- GB-A- 473 857

## Description

### BACKGROUND OF THE INVENTION

### Field of the Invention

The present invention relates to a triboelectric nanogenerator, and specifically, to a single-electrode triboelectric nanogenerator, a generating unit, a power generation method, and a self-driven tracking device based on the nanogenerator.

### Description of the Related Art

Triboelectric nanogenerator generates electric power based on the contact and separation of two materials having different triboelectric properties. However, all known triboelectric nanogenerators need two electrode layers, at least one of which needs to be formed through depositing conductive metal on a triboelectric thin-film material, and realize electrical power output through the two electrode layers. As to this kind of nanogenerator, in one hand, its components have a high manufacturing cost due to the deposition of metals; in the other hand, a thickness of the triboelectric material should be within a certain range. These factors highly limit the spreading and applications of nanogenerators.

Tracking systems have a wide application prospect in safety monitoring, human-machine interface, and medical science. Conventional tracking system tracks and locates movement of an object through using information about time and positions. Existing tracking systems achieve tracking mainly based on optical, magnetic, and mechanical sensors, therefore external power supply is necessary for these sensors. Existing tracking systems are difficult to be widely used in future energy crisis due to their large power consumption, thus the key to thoroughly solve the technical problem of providing a long-term and stable operation of these devices is to develop a self-driven tracking system. Document CN 202 818 150 U discloses an example of a triboelectric nanogenerator having two electrode layers. This document discloses in particular that the nanogenerator comprises a friction layer and two electrode layers, one of the electrode layers being disposed facing the friction layer, this electrode layer being electrically connected to an equipotential source. At least parts of surfaces of the friction layer and the electrode layer are able to contact with and separate from each other under an action of an external force, and at the same time, an electrical signal is output through this electrode layer and the equipotential, wherein, the friction layer and the electrode layer are different in triboelectric polarity sequence.

### SUMMARY OF THE INVENTION

An object of the invention is to provide a single-electrode triboelectric nanogenerator, a nanogenerator set, a power generation method and a self-driven tracking system based on the nanogenerator, which are simple in structure and of low cost, so as to overcome the above-described technical drawbacks in prior arts.

In order to achieve the above object, in one aspect, a single-electrode triboelectric nanogenerator is provided. The nanogenerator comprises a friction layer and only one electrode layer, the electrode layer is disposed facing the friction layer, the electrode layer is electrically connected to an equipotential source, and at least parts of surfaces of the friction layer and the electrode layer are able to contact with and separate from each other under an action of an external force, and at the same time, an electrical signal is output through the electrode layer and the equipotential.

Preferably, the friction layer and the electrode layer are different in triboelectric polarity sequence.

Preferably, a material of the friction layer is selected from any one or any combination of polyimide, polyvinyl chloride, polytetrafluoroethylene, polydimethylsiloxane, polypropylene, polyethylene, polystyrene, polyvinylidene chloride, polyetherchloride, polymethyl methacrylate, polyvinyl alcohol, polyester, polyisobutylene, elastic urethane foam, polyvinyl butyral, nylon, polyacrylonitrile, and biphenol polycarbonate.

Preferably, a surface of the electrode layer contacting the friction layer comprises a conductive material.

Preferably, the electrode layer is made of a conductive material selected from metal, Indium Tin Oxide, an organic conductor, or a doped semiconductor.

Preferably, the metal is selected from gold, silver, platinum, aluminum, nickel, copper, titanium, chromium, selenium, and an alloy thereof, and in that the organic conductor is made of an electrically conductive polymer including self polypyrrole, polyphenylene sulfide, polyphthalocyanine based compounds, polyaniline and polythiophenes.

Preferably, the electrode layer comprises a thin metallic film or a bulk phase material, and the thickness of the film is between 10 nm and 5 mm.

Preferably, a microstructure of a micron magnitude or a submicron magnitude is distributed on parts or all of the surface of the friction layer facing the electrode layer and/or the surface of the electrode layer facing the friction layer.

Preferably, the microstructure is selected from nanowires, nanotubes, nanoparticles, nanorods, nanoflowers, nanogrooves, micron grooves, nanocones, micron cones, nanospheres, microspheres, and an array thereof.

Preferably, the surface of the friction layer facing the electrode layer and/or the surface of the electrode layer facing the friction layer are coated or embellished with a nano-material.

Preferably, the surface of the friction layer facing the electrode layer and/or the surface of the electrode layer facing the friction layer are chemical modified, such that a functional group that is easy to obtain electrons is introduced to one surface of the two surfaces that is relative negative in the triboelectric polarity sequence, and/or a functional group that is easy to lose electrons is introduced to the other surface of the two surfaces that is relative positive in the triboelectric polarity sequence.,

Preferably, the friction layer and/or the electrode layer is made of a hard material.

Preferably, the friction layer and/or the electrode layer is made of a flexible material.

Preferably, the friction layer and the electrode layer have the same size and shape, and are disposed just facing each other.

Preferably, when the friction layer and the electrode layer are separated from each other, a maximum interval between contacting surfaces of the friction layer and the electrode layer . is comparative to or larger than a length and a width of the contacting surfaces of the friction layer and the electrode layer.

Preferably, a ratio between the maximum interval and the length of the contacting surfaces and a ratio between the maximum interval and the width of the contacting surfaces are in a range from 1 to 100.

Preferably, the equipotential source is provided through grounding.

Preferably, the nanogenerator further comprises a load, and the electrode is electrically connected to the equipotential source through the load.

Preferably, the electrical connection is realized through an external circuit that needs to be powered.

Preferably, when no external force is applied, at least parts of the surfaces of the friction layer and the electrode layer contact with or separate from each other, and when an external force is applied, at least parts of the surfaces of the friction layer and the electrode layer separate from or contact with each other.

Preferably, the nanogenerator further comprises an elastic member, and at least parts of the surfaces of the friction layer and the electrode layer are separated from or contact with each other by the elastic member when no external force is applied.

Preferably, two or more elastic members are provided.

Preferably, the elastic member has tensile elasticity or bending elasticity.

Preferably, the nanogenerator further comprises a first support member and/or a second support member, the first support member is fixed to a surface of the friction layer away from the electrode layer, and the second support member is fixed to a surface of the electrode layer away from the friction layer.

Preferably, one end of the elastic member is fixed to the first support member and is arranged around the friction layer, and/or the other end of the elastic member is fixed to the second support member and is arranged around the electrode layer.

Preferably, the first support member and/or the second support member is made of a rigid material.

Preferably, the first support member and/or the second support member is configured to have a flat plate structure.

Preferably, the first support member and/or the second support member is configured to have a curved structure.

Preferably, the first support member and the second support member are in parallel with each other.

Preferably, one end of the first support member joins one end of the second support member.

Preferably, a cavity is formed between the friction layer and the electrode layer, the friction layer and/or the electrode layer has a curved shape bulging outwards in a direction away from the cavity, such that when an external force is applied, at least parts of the surfaces of the friction layer and the electrode layer can contact with each other, and when the external force is removed, the friction layer and the electrode layer restore to their original shapes.

Preferably, the friction layer and the electrode layer are connected with each other at their edges.

Preferably, the friction layer and/or the electrode layer have bending elasticity.

Preferably, an outer side surface of the friction layer in the bulging direction is bonded with a first elastic substrate, and/or an outer side surface of the electrode layer in the bulging direction is bonded with a second elastic substrate.

Preferably, the first elastic substrate and the second elastic substrate are selected from polyimide, polyethylene terephthalate and polystyrene.

Preferably, a thickness of the first elastic substrate and the second elastic substrate is between 50 µm and 10 mm.

Preferably, the first elastic substrate and the friction layer have different thermal expansion coefficients, such that when they are bonded together, the first elastic substrate and the friction layer as a whole bulges towards the first elastic member side; and/or the second elastic substrate and the electrode layer have different thermal expansion coefficients, such that when they are bonded together, the second elastic substrate and the electrode layer as a whole bulges towards the second elastic member side.

Preferably, the friction layer is curved and bulges outwards away from the cavity, the electrode layer is plane, and a size of the friction layer is smaller than that a size of the electrode layer.

Preferably, the nanogenerator set comprises two or more nanogenerators according to any one of claims 1 to 38 connected in parallel, and electrical signals output from the nanogenerators are monitored separately or unifiedly.

Preferably, the two or more nanogenerators are superposed together in the longitudinal direction to form the nanogenerator set.

Preferably, two adjacent nanogenerators are securely connected through an insulating layer.

Preferably, two adjacent nanogenerators share a common electrode layer.

Preferably, as compared with the friction layers in the two adjacent nanogenerators, the common electrode layer tends to lose electrons.

Preferably, the two or more nanogenerators are arranged side by side to form the nanogenerator set.

Preferably, all the nanogenerators share a common electrode layer, and all the friction layers are located at the same side of the common electrode layer.

Preferably, the two or more nanogenerators are partially different from each other, or completely the same.

A power generation method is further provided, in which one of the nanogenerators or the nanogenerator sets described in this disclosure is used, the method comprises steps of:
(1) providing the friction layer,
(2) providing the electrode layer,
(3) forming an electrical connection between the electrode layer and an equipotential source;
(4) applying an external force such that at least one contact-and-separation cycle is formed between at least parts of surfaces of the friction layer and the electrode layer; and
(5) outputting an electrical signal through the electrode layer and the equipotential source during step (4).

Preferably, the external force applied in step (4) is a continuous external force, the direction of which is periodically reversed, or the magnitude of which is periodically changed.

A tracking system based on single-electrode triboelectric nanogenerators is further provided, which comprises two or more of the nanogenerator described above, the friction layer or the electrode layer of each nanogenerator is disposed facing upwards on a surface on which an object to be tracked moves, and at least parts of the surfaces of the friction layer and the electrode layer can contact each other under the pressure of the object to be tracked and can restore to their original shapes after the object to be tracked has left, and electrical signals output from each of the nanogenerators are separately monitored.

As compared with prior arts, the single-electrode triboelectric nanogenerator according to the invention has the following advantages:
1. The single-electrode triboelectric nanogenerator can be made of just one triboelectric polymer material and one conductive material, no metal electrode layer needs to be coated on the surface of the triboelectric polymer material, and manufacturing cost is significantly reduced.
2. Electrical signal of the triboelectric nanogenerator may be output in way of connecting one end thereof to the ground, and the circuit used in this process is significantly simplified, such that application field of the nanogenerator is greatly extended.
3. A self-driven tracking system can be manufactured through using an array of the triboelectric nanogenerator. The tracking system realizes an efficient detection based on the interaction between the object to be detected and environment. This system does not need external power source, and signals are output from nanogenerators which are triggered during the movement of the object, such that a detection of the object can be realized.

### BRIEF DESCRIPTION OF THE DRAWINGS

The above and other objects, features and advantages of the present invention will become more obvious when referring to the drawings. Similar reference numerals throughout the drawings indicate the same parts. The drawings are not drawn to scale, so as to emphasize the main concept the present invention.
Fig. 1 is a schematic view showing a typical structure of a single-electrode triboelectric nanogenerator according to the invention;
Fig. 2 is a schematic view showing the operating principle of the single-electrode triboelectric nanogenerator according to the invention;
Fig. 3 is a schematic view showing another typical structure of the single-electrode triboelectric nanogenerator according to the invention;
Figs. 4(a) and 4(b) are schematic views showing typical structures of the single-electrode triboelectric nanogenerators according to the invention;
Fig. 5 is a schematic view showing another typical structure of the single-electrode triboelectric nanogenerator according to the invention;
Fig. 6 is a schematic view showing a typical mounting structure of an elastic part in the single-electrode triboelectric nanogenerator according to the invention;
Fig. 7 is a schematic view showing another typical mounting structure of an elastic part in the single-electrode triboelectric nanogenerator according to the invention;
Fig. 8 is a schematic view showing a typical structure of the single-electrode triboelectric nanogenerator according to the invention, which comprises a support member;
Fig. 9 is a schematic view showing another typical structure of the single-electrode triboelectric nanogenerator according to the invention, which comprises a support member;
Fig. 10 is a schematic view showing another typical structure of the single-electrode triboelectric nanogenerator according to the invention, which comprises a support member;
Figs. 11(a) and 11(b) are schematic views showing typical structures of the single-electrode triboelectric nanogenerator according to the invention, each of which comprises a support member;
Figs. 12(a) to 12(c) are schematic views showing typical structures of the single-electrode triboelectric nanogenerator according to the invention;
Fig. 13 is a schematic view showing another typical structure of a single-electrode triboelectric nanogenerator unit according to the invention;
Fig. 14 is a schematic view showing another typical structure of the single-electrode triboelectric nanogenerator unit according to the invention;
Fig. 15 is a schematic view showing another typical structure of the single-electrode triboelectric nanogenerator unit according to the invention;
Fig. 16 is a schematic view showing another typical structure of the single-electrode triboelectric nanogenerator unit according to the invention;
Fig. 17 is a schematic view showing another typical structure of the single-electrode triboelectric nanogenerator unit according to the invention;
Fig. 18 is a schematic view showing a tracking system based on the single-electrode triboelectric nanogenerator according to the invention;
Fig. 19 is a schematic diagram showing the short-circuit current output according to a second embodiment of the invention;
Fig. 20 is schematic diagram showing a circuit connection of the tracking system according to a third embodiment of the invention;
Fig. 21 is schematic diagram showing acquired signals at work according to the third embodiment of the invention.

### DETAILED DESCRIPTION OF PREFERRED EMBODIMENTS OF THE INVENTION

The technical solution in embodiments of the present invention will be described clearly and completely in connection with the accompanying drawings of these embodiments. Obviously, the described embodiments are merely part not all of the embodiments of the present invention. All other embodiments obtained without creative efforts based on the embodiments of the present invention by those skilled in the art shall fall within the scope of the present invention.

Further, the embodiments of the present invention are described in detail in conjunction with the attached drawings, which are just to give examples and not to limit the scope of this invention.

The "grounding/grounded" as used in the description means connecting to an object that can provide or receive large amount of charges, in which "ground" conventionally refers to an inductive object or earth that has a potential of zero, for example, a metal shell of a ship or a vehicle.

The "triboelectric polarity sequence" used in the description means that the materials will be ordered in a sequence based on the levels of their attractions to electric charges. When two materials are rubbing against each other, negative charges is transferred from a surface of a material having a relative positive polarity among the triboelectric polarity sequence to a surface of a material having a negative positive polarity among the triboelectric polarity sequence. For example, when a high-molecular material Polytetrafluoroethylene (PTFE, or Teflon) contacts an aluminum foil, the aluminum foil will get positive charges, and the PTFE will get negative charges, which means that the aluminum foil has a weak ability to get electrons, and the PTFE has a weak ability to get electrons. So far, there is no universal theory to fully explain the mechanism of charge transfer. Generally, it is believed that charge transfer relates to surface work function of a material, and charge transfer is realized through transferring of electrons or ions on the contact surface. It should be noted that, the triboelectric polarity sequence is a statistical results based on experiences, that is, the further two materials differs in this sequence, the greater probability of the positive or negative polarity of generated charges being consistent with the sequence after contact of the two materials is. However, actual results are influenced by many factors, such as surface roughness, environmental humidity and whether there is a relatively friction.

The "charge of contact" refers to charges on surfaces of two materials having difference in triboelectric polarity sequence after the two materials contact and rub with each other and separate from each other. Generally, it is believed that the charges are only distributed on surface of a material, and the maximum depth of such distribution is no larger than about 10 nm. Note that, the sign of charge of contact is the sign of net charge. That is to say, a local region having collected negative charges may exist on the surface of a material having positive charge of contact, but the net charge of the entire surface is positive.

The longitudinal direction as defined in the description indicates a direction along which a friction layer and an electrode layer are in an up-and-down relationship. That is to say, both states of the friction layer being disposed on top of the electrode layer and the electrode layer being disposed on top of the friction layer may be referred as being in the longitudinal direction.

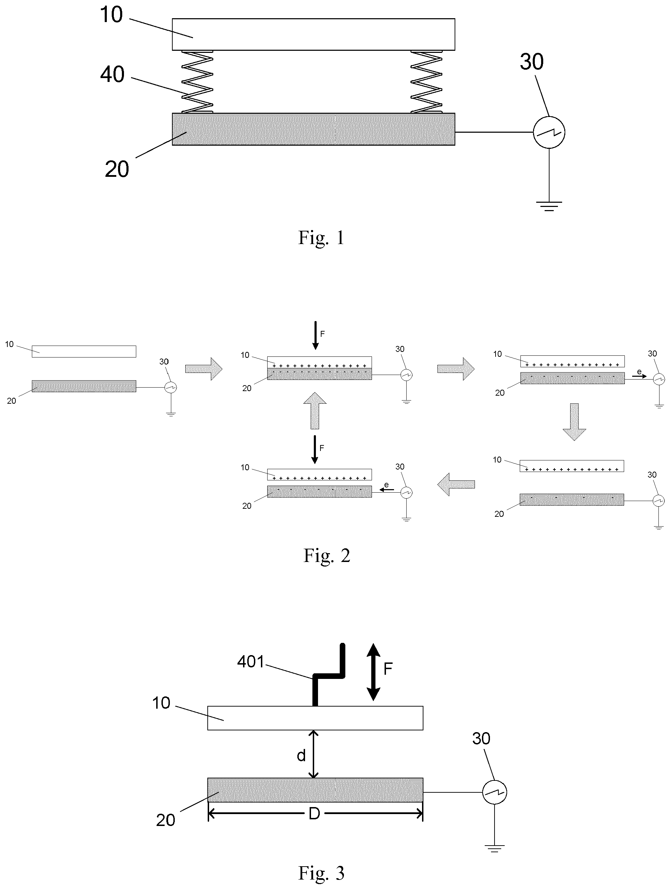

Fig. 1 shows a typical structure of a single-electrode triboelectric nanogenerator according to the invention, in which a nanogenerator comprises a friction layer 10 and an electrode layer 20. The electrode layer 20 is connected through an external circuit 30 to earth which provides an equipotential. The friction layer 10 and the electrode layer 20 are disposed facing each other with a certain interval by an elastic member 40, and at least parts of the surface of the friction layer 10 and parts of the surface of the electrode layer 20 can repeatedly contact with and separate from each other under an external force and at the same time supply electric power to an external circuit 30.

For convenience of explanation, the theory of the present invention, the principle of choosing each component and the range of materials will be described in connection with the typical structure shown in Fig. 1. However, these contents are not limited to the embodiment shown in Fig. 1, but can be applied to all technical solutions disclosed in the invention.

Working theory of the nanogenerator according to the invention will be described in connection with Fig. 2: the friction layer 10 and the electrode layer 20 have different positions in the triboelectric polarity sequence, that is, they are different in the ability of obtaining electrons (herein, for example, the friction layer 10 is weaker in the ability of obtaining electrons). Therefore, when a compressive force F is applied on a nanogenerator, parts of the surface of the friction layer 10 and parts of the surface of electrode layer 20 contact with each other, which causes the surface of the friction layer 10 to have positive charges, and the surface of the electrode layer 20 to have negative charges. When the compressive stress is released, the elastic member 40 causes the friction layer 10 and the electrode layer 20 to separate from each other, therefore a charge balance between the surfaces of the friction layer 10 and the electrode layer 20 is destroyed. In order to restore the charge balance, electrons move from the electrode layer 20 to earth through the external circuit 30, thereby outputting electrical signal(s); when an interval between the friction layer 10 and the electrode layer 20 reaches a maximum value, charge balance is restored between the surfaces of the two layers, and electrons will not move anymore; when the compressive stress is applied on the nanogenerator again, the elastic member 40 is compressed, and the surfaces of the friction layer 10 and the electrode layer 20 become close to each other, and the charge balance both between the surfaces thereof are again destroyed, thus, electrons move from the electrode layer 20 to earth through the external circuit 30, and output a current. When the friction layer 10 and the electrode layer 20 in fully contacted with each other, charges on the contact surfaces are balanced, the electrons stop moving in a certain direction, and therefore no current can be observed in the external circuit 30.

It can be seen from the above-described principle of power generation, the difference between the friction layer 10 and the electrode layer 20 in the triboelectric polarity sequence is the key to generate an electrical signal. The following polymers can be used in the friction layer 10 according to the present invention, and are ordered such that their abilities to obtain electrons are getting stronger along this order: polymethylmethacrylate, nylon, polyvinyl alcohol, polyester, polyisobutylene, elastic sponge made from polyurethane, polyethylene glycol terephthalate, polyvinyl butyral, polychloroprene, natural rubber, polyacrylonitrile, biphenol polycarbonate, polyetherchloride, polyvinylidene chloride, polystyrene, polyethylene, polypropylene, polyimide, polyvinyl chloride, polydimethylsiloxane, polytetrafluoroethylene. For the sake of conciseness, not all possible materials are listed, and only a few specific polymeric materials are listed for reference. However, the listed materials shall not be considered as a limitation to the invention, because under the teaching of the invention, it is obvious for those skilled in the art to choice other similar materials based on their triboelectric properties.

Through experiments, it is found that, the greater the difference between the friction layer 10 and the electrode layer 20 in the ability of obtaining electrons is, the stronger an electronic signal outputted by nanogenerator is. Therefore, an optimal performance of the electronic signal can be arrived through selecting an appropriate polymer material as the friction layer 10 based on the order listed above.

The electrode layer 20 in the nanogenerator is not only used to provide a friction surface for power generation, but also acts as an electrode, thus, when an electric field formed by the charges on the surfaces is not balanced, electrons can be transmitted through the external circuit 30. Thus, the surfaces of electrode layer 20 in contact with the friction layer 10 should be made of a conductive material, or the entire electrode layer 20 is made of a conductive material. The conductive material may be selected from a metal, indium tin oxide, organic conductor or a doped semiconductor material. The electrode layer 20 may be in a shape of a plate, a sheet or a film, where a thickness of the film is in a range of 10 nm to 5 mm, preferably 50 nm to 1 mm, and more preferably 100 nm to 500 µm. Commonly used metals in the art include gold, silver, platinum, aluminum, nickel, copper, titanium, chromium, or selenium, and an alloy thereof; the organic conductor is usually a conductive polymer, which comprises polypyrrole, polyphenylene sulfide, poly phthalocyanine based compound, polyaniline and/or polythiophene.

In order to improve output performance of the nanogenerator according to the present invention, preferably, microstructures of micron magnitude or submicron magnitude are distributed on parts or all of the surface of the friction layer 10 facing the electrode layer 20 and/or the surface of the electrode layer 20 facing friction layer 10, so as to increase an effective contact area between the friction layer 10 and the electrode layer 20 and increase a surface charge density of the two layers. The microstructures are preferably nanowires, nanotubes, nanoparticles, nanorods, nanoflowers, nanogrooves, micron-grooves, nano-cones, micron-cones, nanospheres and micron-spheres, and an array formed by the aforementioned structures, in particular a nano-array formed by the nanowires, nanotubes or nanorods, which may be in a shape of a wire, a cube, or a rectangular pyramid through photolithography, plasma etching process and the like. The sizes of each of such units are in a range from a nano magnitude to a micron magnitude. It should be noted that, the sizes and shapes of the units having a microstructure should not be considered as a limitation to the scope of the invention.

The methods of forming the nano-array include chemical methods besides physical methods, for example, photolithography, chemical etching, plasma etching, etc. Moreover, it can also be realized through embellishing or coating nanomaterials. In addition, the surface of the friction layer 10 and/or the surface of the electrode layer 20 that contact each other may be chemically modified, which can further increase the amount of charge transfer at the moment of contact, thereby increasing contact charge density and increasing output power of the nanogenerator. Chemical modifications may be divided into the following two types:

One method is that, for the friction layer 10 and the electrode layer 20 that contact with each other, a functional group that is easy to lose electrons (i.e., a strong electron donating group) is introduced to a surface of a material that is relative positive in the triboelectric polarity sequence, or a functional group that is easy to obtain electrons (i.e., a strong electron withdrawing group) is introduced to a surface of a material that is relative negative in the triboelectric polarity sequence, so as to increase the amount of charge transfer when the surfaces are sliding relative to each other, thereby increasing contact charge density and increasing output power of the nanogenerator. The strong electron donating groups include an amino group, a hydroxy group, an alkoxy group and the like. The strong electron withdrawing groups include an acyl group, a carboxyl group, a nitryl group, sulfonic acid groups and the like. Introduction of the functional groups may be achieved through conventional methods such as plasma surface modification. For example, mixed gas of oxygen and nitrogen can produce a plasma at a certain power, thereby introducing amino groups to the surface of the friction surface layer.

Another method is that, positive charges are introduced to a surface of a material that is relative positive in the triboelectric polarity sequence, or negative charges are introduced to a surface of a material that is relative negative in the triboelectric polarity sequence, which can be achieved by way of chemical bonding. For example, tetraethoxysilane (TEOS) is used to modify the surface the friction layer made of polydimethylsiloxane (PDMS) through a sol-gel method, such that the surface is negatively charged. Also, nanogold particles, whose surfaces contains cetyltrimethylammonium bromide (CTAB), may be used to modify a gold film layer through the gold-sulfur bondings, since CTAB is a cation, it will make the whole friction layer become positively charged. Those skilled in the art can select a suitable material to bond the material of the friction layer based on the characterization of withdrawing or donating electrons and the type of surface chemical bonds of the material of the friction layer, so as to achieve the purpose of the present invention, therefore such modifications are within the scope of the present invention.

The present invention is not so limited that the friction layer 10 and the electrode layer 20 must be of a hard material, they can also be soft materials, because hardness of a material does not affect the effect of contact friction therebetween. If the friction surface should be maintained to be flat, then they can be supported by other components. Thus, those skilled in the art can determine hardnesses of the materials of the friction layer 10 and the electrode layer 20 based on practical situation.

The friction layer 10 and the electrode layer 20 shown in Fig. 1 have the same size and shape and are disposed facing each other, such that the friction layer 10 and the electrode layer 20 can fully contact with each other under the action of an external force. However, it is just a relatively preferable embodiment. The nanogenerator can normally work as long as parts of surfaces of the friction layers 10 and the electrode layer 20 can contact with and separate from each other repeatedly. Therefore, the shape and size of the friction layer 10 and the electrode layer 20 do not need to be identical, and relative positions thereof do not need to be completely aligned, which can be determined by those skilled in the art based on actual environment of application.

In experiments, the inventors found that, when a maximum interval d between contacting parts of the surface of the friction layer 10 and the surface of the electrode layer 20 is comparative with or even larger than the length and width D of the contacting surface therebetween, the output performance of the nanogenerator is better (in Fig. 3, only the length of the contacting surface is shown, and the width is not shown, however, the size of the width is also comparative with the length d)., the output performance of the nanogenerator is better. Preferably, a ratio of the maximum interval d to the length or to the width is in a range from 1 to 100. Of course, the ratio can be even larger, and theoretically electrical signal output performance will be better. However, the difficulty of manufacturing the components should be taken into account. Therefore, practically, the sizes and relative positions of the friction layer 10 and the electrode layer 20 may be adjusted based on the principles so as to achieve a better power generation performance.

Establishing an electrical connection between the nanogenerator and an equipotential source is the key to properly operate the nanogenerator of the present invention, and such an equipotential source may be provided through grounding or an external compensation circuit. The electrical connection herein may be directly realized through the external circuit 30 that needs to be powered, or may be realized through providing a load inside the nanogenerator (not shown in the drawings), i.e., the electrode layer 20 is electrically connected to the equipotential source through the load, the external circuit 30 that needs to be powered receives an electrical signal through connecting in parallel or in series with respect to the load.

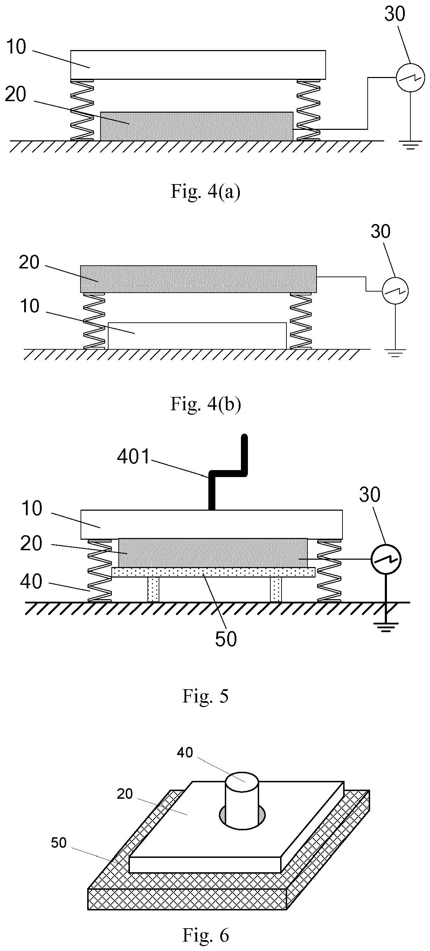

A function of the elastic member 40 is to cooperate with an external force to realize contact and separation of the friction layer 10 and the electrode layer 20 repeatedly. Therefore, if the external force applied on the nanogenerator periodically changes in its direction, and the contact and separation of the friction layer 10 and the electrode layer 20 can be realized repeatedly, then the elastic member 40 is not a necessary component. For example, in the embodiment shown in Fig. 3, the friction layer 10 is moved back and forth by an external force F through a connecting member 401, such that the friction layer 10 and the electrode layer 20 can contact with each other and separate from each other periodically, and the nanogenerator can be operated properly. However, if the nanogenerator cannot be properly operated only by the applied external force, then the elastic member 40 is needed. For example, in the embodiment shown in Fig. 1, two opposite ends of each elastic member 40 are fixed respectively to the surfaces of the friction layer 10 and the electrode layer 20 facing each other, such that at least parts of the surfaces of the two layers are separated in the absence of an external forces, and the friction layer 10 and the electrode layer 20 can be compressed and bent to contact each other under an action of an external force. In order to further improve the effect of such contact between the friction layer 10 and the electrode layer 20, the positions where the elastic members 40 are fixed can also be adjusted. For example, in the embodiment shown in Fig. 4, one end of an elastic member 40 is fixed to the surface of the friction layer 10 facing the electrode layer 20, and the other end is fixed on a support for the electrode layer 20, as shown in Fig. 4(a); or, one end of the elastic member 40 is fixed to the surface of the electrode layer 20 facing the friction layer 10 and the other end is fixed on a support for the friction layer 10, as shown in Fig. 4(b). In both ways, the elastic member 40 can be compressed, a complete surface contact between the friction layer 10 and the electrode layer 20 can be realized, the friction layer 10 and the electrode layer 20 can be separated when the external force is released, and at the same time, a problem of the thickness of the elastic member 40 affecting the performance of the contact can be avoided. When the applied external force is a pulling force instead of a compressive force, an embodiment shown in Fig. 5 can be adopted, and in this embodiment, the presence of the elastic member 40 ensures that the friction layer 10 and the electrode layer 20 are able to contact again after the pulling force is released, such that a contact-and-separation cycle of the friction layer 10 and the electrode layer 20 can be realized. In this embodiment, a support member 50 is used to support the electrode layer 20. The elastic members 40 may be distributed at peripheral regions of the friction layer 10 and/or the electrode layer 20, or they may be located at central positions of the friction layer 10 and the electrode layer 20. For example, as shown in Fig. 6, an elastic member 40 is located at the central position of the electrode layer 20. Of course, if sizes of the electrode layer 20 and/or the friction layer 10 are large, a plurality of such elastic member 40 may be located in a central region of the contacting surfaces.

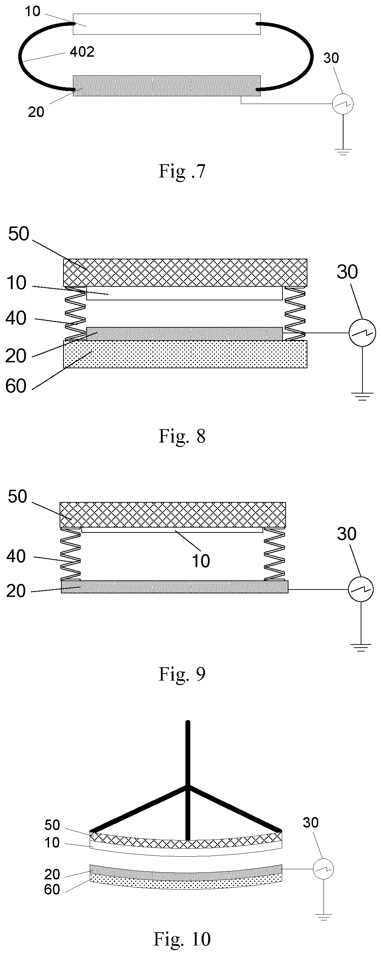

The elastic members 40 may be a conventional elastic member in the field which can provide elasticity. It can be a component providing longitudinal tensile elasticity, such as a spring, a rubber, a polyurethane elastomer, a sponge and the like. It may also be a component that can be elastically bent, such as a metal foil and a thermoplastic elastic sheet and the like. In an embodiment shown in Fig. 7, an elastic sheet 402 having both end thereof fixed to the friction layer 10 and the electrode layer 20 respectively is used as the elastic member. This elastic sheet 402 is capable of being elastically bent, that is, when an external compressive force is applied, the sheet can be deformed such that the friction layer 10 and the electrode layer 20 contact with each other, and when the external force is removed, the elasticity thereof will cause the friction layer 10 and the electrode layer 20 to separate from each other. Thickness, shape and sizes of the elastic sheet 402 may be selected based on actual situations, overall mechanical strength, and required flexibility. Such selections are conventional to those skilled in the art.

The number of elastic members 40 may be determined depending on actual requirements. If the friction layer 10 and electrode layer 20 have large sizes, more elastic members 40 will be needed, and if the friction layer 10 and electrode layer 20 have smaller sizes, then the number of the elastic members 40 will be decreased. Preferably, two or more elastic members 40 are provided.

Another typical embodiment of the nanogenerator according to the present invention is shown in Fig. 8, which comprises a friction layer 10 and an electrode layer 20. The electrode layer 20 is connected through an external circuit to earth which provides an equipotential. The friction layer 10 and the electrode layer 20 are disposed facing each other with a certain interval by an elastic member 40, and at least parts of the surface of the friction layer 10 and parts of the surface of the electrode layer 20 can repeatedly contact with and separate from each other under an external force and at the same time supply electric power to an external circuit 30. In order to ensure the mechanical strength of the nanogenerator, a first support member 50 fixed to the friction layer 10 on a side of the electrode layer 20 away from the friction layer 10 is provided, and a second support member 60 fixed to the electrode layer 20 on a side of the friction layer 10 away from the electrode layer 20 is provided, and elastic members 40 are fixed at both ends thereof to a lower surface of the first support member 50 and an upper surface of the second support member 60, respectively.

The first support member 50 and the second support member 60 may be rigid or elastic, as long as they can provide a supporting function, and a material thereof may be an insulating material or a semiconductor material, such as a plastic plate or a silicon sheet. The shapes and sizes of the supporting members can be arbitrarily selected, and preferably, match the shapes and sizes of the friction layer 10 and the electrode layer 20. The thicknesses thereof may be selected depending on the material and requirements.

The first support member 50 and the second support member 60 may be used at the same time, or only one of them is used. In an embodiment shown in Fig. 9, the electrode layer 20 is made of a metal sheet having a certain mechanical strength, the friction layer 10 having a relative small thickness is bonded to the lower surface of the first support member 50, the elastic members 40 are disposed around the friction layer 10, with one end fixed to the lower surface of the support member 50 and the other end fixed to the upper surface of the electrode layer 20.

The first support member 50 and the second support member 60 may be in a plate shape, or in other shapes, as long as they can provide a supporting effect. In the embodiment shown in Fig. 10, the first support member 50 has an approximately umbrella-shaped structure, which provides a curved supporting surface for the friction layer 10 and can be used to transmit an external force. The second support member 60 is a component having a similar curved configuration and disposed in parallel with the first support element 50. It can be seen from the above, the first support member 50 and the second support member 60 cooperate with each other to form two curved friction surfaces, such friction surfaces will not affect normal operation of the nanogenerator, and such a configuration may be used in more working environments.

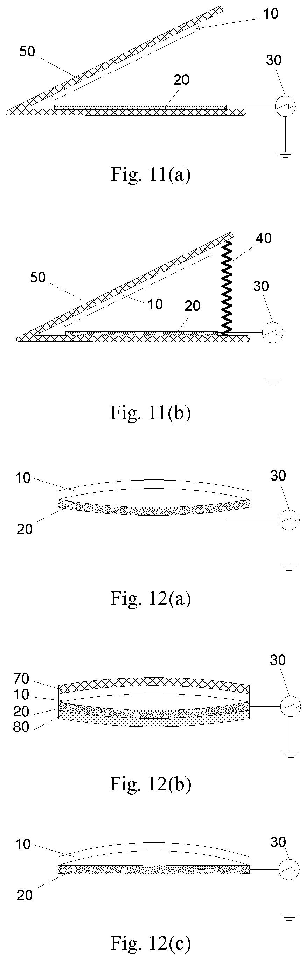

The first support member 50 and the second support member 60 can not only be disposed in parallel to each other, but also form a certain angle. For example, in an embodiment shown in Fig. 11, one end of the first support member joins one end of the second support member, and preferably, the first support member and the second support member are integrally formed, such that they can be regarded as a single component and will be referred as the first support member 50 collectively hereinafter. In the embodiment shown in Fig. 11(a), the first support element 50 has certain elasticity, and can maintain a V-shaped configuration in the absence of an external force. The friction layer 10 and the electrode layer 20 are mounted respectively bonded to two inside surfaces of the first support member 50, and the electrode layer 20 is grounded via the external circuit 30. When an external force is applied, the first support member 50 is compressed, such that the friction layer 10 and the electrode layer 20 mounted thereto can achieve a surface contact. When the external force is removed, the first support member 50 restores due to its own elasticity and nanogenerator is restored to the V-shaped configuration, such that the friction layer 10 and the electrode layer 20 are separated, and thereby one power generation cycle is formed.

When the first support element 50 does not have enough flexibility, an elastic member 40 may be mounted at the open end of the V-shaped configuration, as shown in Fig. 11(b), such that after the external force is removed, the friction layer 10 and the electrode layer 20 can be separated quickly. This configuration can also prolong the life of the nanogenerator, and elasticity requirement regarding the first support member 50 can be reduced.

In a typical embodiment of the nanogenerator according to the present invention shown in Fig. 12, the nanogenerator comprises a friction layer 10 and an electrode layer 20 disposed facing each other and connected with each other through edges thereof, such that a cavity is formed therebetween. Each of the friction layer 10 and the electrode layer 20 has a curved shape bulging ding outwards in a direction away from the cavity. When an external force is applied, at least parts of the surfaces of the friction layer 10 and the electrode layer 20 can contact with each other, and when the external force is removed, the friction layer 10 and the electrode layer 20 restore to original shapes, as shown in Fig. 12(a). The electrode layer 20 and an external circuit 30 providing an equipotential are used to output electrical signals.

The components in this embodiment should meet the requirements of the embodiments shown in Figs. 1 to 11, and besides that, the friction layer 10 and the electrode layer 20 shall have bending elasticity, so that after the external force is removed, the components can restore quickly to their original shape and the nanogenerator is thereby working properly. The elasticity may be achieved through selecting suitable materials, for example, a rubber having elasticity or a polyurethane elastomer and the like can be used. Or, the elasticity may be achieved by structure adjustment, for example, the electrode layer may be formed of a thin metal sheet instead of a metal plate, etc. These are conventional in the art, and will not be described in detail herein.

If the friction layer 10 and the electrode layer 20 do not have bending elasticity, an elastic substrate should be provided to ensure the normal operation of the nanogenerator. In the embodiment shown in Fig. 12(b), outer surfaces of the friction layer 10 and the electrode layer 20 are bonded with a first elastic substrate 70 and a second elastic substrate 80 respectively. These two substrates are made of a material having bending elasticity, and may be an insulator or a semiconductor. Preferably, the first elastic substrate 70 and the second elastic substrate 80 may be selected from polyimide, polyethylene glycol terephthalate, and polystyrene. A thickness of the elastic substrate may be varied as long as requirements for the elastic substrate can be met, and may be between 50 µm and 10 mm, preferably between 100 µm and 5 mm, and more preferably between 127 µm and 1 mm. The first elastic substrate 70 and the second elastic substrate 80 may be formed of a material different having a thermal expansion coefficient that is different from that of the material of the friction layer 10 and the electrode layer 20, such as silicon dioxide or the like, because if two materials having two different thermal expansion coefficients are bonded together, the whole structure tends to be bent, and it is even more so when the difference is large. That is, when the first elastic substrate 70 and the friction layer 10 are bonded together, the whole structure tends to bulge towards the first elastic substrate 70 side; and when the second elastic substrate 80 and the electrode layer 20 are bonded together, the whole structure tends to bulge towards the second elastic substrate 80 side.

The edges of the friction layer 10 and the electrode layer 20 are connected through conventional means in this technical field. For example, they may be bonded with insulating glue, a double-sided adhesive tape, or a clamping member.

In this typical embodiment, the friction layer 10 and the electrode layer 20 may both be curved, preferably, the two curved layers have the same size and shape; or, only one of the friction layer 10 and the electrode layer 20 is curved, and preferably the electrode layer 20 has a smaller size than that of the electrode layer 10, as shown in Fig. 12(c).

Hereinbefore, typical embodiments of the single-electrode nanogenerator according to the invention are provided. Nanogenerators operated in different environments can be obtained by those killed in the art through simply modifying the above embodiments. However, all such modifications are made within the concept of the invention, and thereby fall within the scope of the invention.

In order to increase mechanical energy utilization efficiency of the nanogenerator and improve output strength of the electrical signal, two or more single-electrode nanogenerators according to the invention may be combined to form a nanogenerator set, and the connection between the nanogenerators may be adjusted, and the electrical signals output from the nanogenerators that are connected in parallel may be monitored separately or unifiedly, so as to meet different needs. It should be noted that, all nanogenerator sets mentioned hereinafter is related to the nanogenerator according to the invention as described above, and all components thereof are already described in detail. Therefore, hereinafter, only the overall structures of the generating sets, the connection relationship between the nanogenerators, and components having special requirements will be described, the description of other components of the nanogenerator having no special requirements will not be repeated, please refer to previous description where necessary.

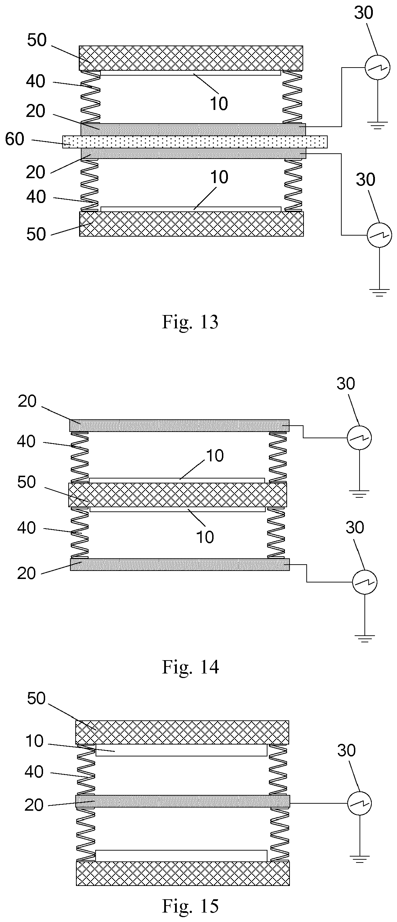

Fig. 13 is a typical embodiment of the nanogenerator set according to the present invention, which comprises two nanogenerators shown in Fig. 9, and the two nanogenerators are superposed simply in a longitudinal direction with an insulating layer 60 interposed between two electrode layers 20, and electrical signals from each nanogenerator are separately collected. The insulating layer 60 may be formed of a material having an insulating function, for example, a plastic plate, a rubber sheet, and size and shape of the insulating layer may be selected based on practical situation.

According to this embodiment, when an external force F is applied on the nanogenerator set, two nanogenerators can be driven to operate simultaneously, thereby improved the utilization efficiency of mechanical energy. Of course, the number of the nanogenerators may be varied based on the magnitude of the external force as long as all the nanogenerators can properly operates, and generally, the greater the force is, the greater the number of the nanogenerators is. The nanogenerators that are superposed may be the same or different. Specifically, in the circumstance that the external circuits 30 have different requirements for power supply, using different nanogenerators unit may solve this issue better. If stronger electrical signal output is needed, then an interval between the friction layer 10 and the electrode layer 20 of one nanogenerator may be increased; if high sensitivity is needed, then contact surfaces of the friction layer 10 and the electrode layer 20 of the nanogenerator may be treated, for example, forming a nanostructure to increase an area of the contact surfaces, and the likes.

In order to achieve the same purpose as the above, a configuration shown in Fig. 14 may be used. In this embodiment, the insulating layer 60 is omitted, and the upper and the lower nanogenerators share the same first support member 50. Thus, the efficiency in force transmitting is higher and the cost is reduced. However, such a configuration has a deficiency in flexibility of adjusting the structure.

Fig. 15 shows a nanogenerator set connected in parallel, in which each nanogenerator consists of a friction layer 10, an electrode layer 20 disposed facing the friction layer 10, a first support member 50 bonded to an upper surface of the friction layer 10, and a plurality of elastic members 40 located between the first support member 50 and the electrode layer 20. One end of the elastic member 40 is fixed on the surface of the first support member 50, and the other end is fixed to the surface of the electrode layer 20; the plurality of elastic members 40 are arranged uniformly around the friction layer 10; the adjacent upper and lower nanogenerators share one common electrode layer 20, and an electrical signal is output through the electrode layer 20 and an external circuit 30 providing an equipotential. If nanogenerators of the nanogenerator set operate simultaneously, the two adjacent nanogenerators sharing the common electrode layer 20 should meet the following condition: as compared with two friction layers 10, the common electrode layer 20 shall have the same tendency to lose or obtain electrons, that is, if the common electrode layer 20 tends to lose electrons relative to one friction layer 10 in one nanogenerator, then the common electrode layer 20 should have the same tendency to lose electrons relative to the other friction layer 10 in the other nanogenerator, such that the surface charges generated during friction between the electrode layer 20 and the two friction layers 10 will not be cancelled. However, if the two nanogenerators are just superposed together sharing the electrode layer 20 during manufacturing and do not work at the same time, then the materials for the friction layer 10 and the electrode layer 20 in the nanogenerators are not so limited.

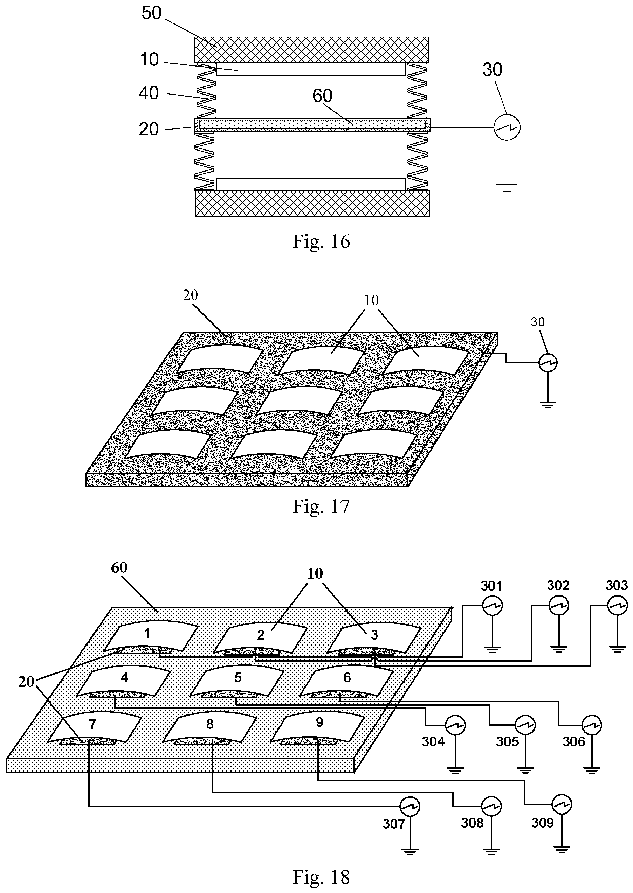

In order to reduce cost and weight, the nanogenerator sets shown in Fig. 15 may be modified as follows: a plate-shaped component made of a lightweight material is used as a second support member 20, and outer surfaces of the second support member 20 are bonded with thin conductive layers so as to be used as the common electrode layer 20, and detailed structure of this modification is shown in Fig. 16.

All the configurations shown in Figs. 13 to 16 are formed through superposing nanogenerators in the longitudinal direction, and nanogenerator sets formed in such a configuration are easy to be operated synchronously. However, the area to be applied with an external force is limited, and thereby a high stability of the external force is required. If the position where an external force is applied changes frequently, then its power generation efficiency is affected. To accommodate a situation in which the position where an external force is applied will possibly change, the nanogenerator set may be formed through arranging the nanogenerator side by side, and a specific structure is shown in Fig. 17, in which a nanogenerator set is formed by a plurality of nanogenerators arranged on the same plane, and the friction layer 10 of each nanogenerator is made of a material having bending elasticity and is bent into an arcuate shape, and is fixed at both ends thereof to the surface of the electrode layer 20. All nanogenerators share the same electrode layer 20, and all friction layers 10 are located at the same side of the common electrode layer 20. The electrode layer 20 forms a circuit through conductive wires with the external circuit 30 having one end thereof grounded.

Although in this embodiment the friction layer 10 is in an arcuate shape capable of being elastically bent, it is just an example. In fact, all nanogenerators shown in Figs. 1-11 of this disclosure may form a nanogenerator set in similar ways and achieve the same technical effect. The nanogenerators in the nanogenerator set may be the same or different. When all the friction layer 10 are the same, if an external force is applied on any one of the nanogenerators in the nanogenerator set, then all nanogenerators will output the same electrical signals, and if the external force is applied on a plurality of nanogenerators, then the output electrical signals will be superimposed. Thus, a scope in which the external force is applied, and the contact area between the source of the external force and the nanogenerator can be deduced. With this feature, the nanogenerator set may be used to detect the contact area. When the frictions layers 10 in the nanogenerators are not the same, different electrical signals will be output if the same external force is applied on the different individual nanogenerators. That is, the electrical signal may reflect the coordinate information of the external force. Based on this feature, the nanogenerator set may be used to track the path of the external force. For external forces having different magnitudes, the value of the electrical signal output from the same nanogenerator will vary. The inventor of the present invention have found that a magnitude of a pressure applied to the nanogenerator is a positively correlated with the output electrical signal, and therefore the nanogenerator set may also be used to monitor the distribution of pressure.

Of course, for a nanogenerator set that comprises nanogenerators arranged side by side and the electrode layer 20 thereof is not shared, the area detecting and path tracking functions may also be realized. However, this requires that each nanogenerator should be monitored separately, and path information provided by each monitor should be correlated in advance so as to realize the path tracking function. An advantage of this embodiment is that the contact area between the source of the external force and the nanogenerator and path of movement can be conveniently and directly monitored. Based on such principles, the present invention also provides a tracking system (see Fig. 18) comprising two or more nanogenerators as previously described. At least parts of the surfaces of the friction layer 10 or the electrode layer 20 in each nanogenerator can contact each other under the pressure of an object to be tracked, and the surfaces may be restored to their original shape after the object to be tracked leaves. Electrical signals output from each of the nanogenerators are separately monitored; each monitoring circuit (reference numerals 301, 302, ......, 309 in the figure) is grounded at one end thereof, and the signals output from each of the nanogenerators are sampled synchronously. When an object moves on the tracking system, different nanogenerators contact the object successively, and compressive forces applied on the different nanogenerators causes the nanogenerators to output signals. We can know the specific path along which the object moves on the tracking system.

From the foregoing description, it can clearly understand that the present invention also discloses a new power generation method, characterized by using any one of the nanogenerators or nanogenerator sets disclosed in the present invention, and the method includes the following steps:
(1) providing the friction layer,
(2) providing the electrode layer,
(3) forming an electrical connection between the electrode layer and an equipotential source;
(4) applying an external force such that at least one contact-and-separation cycle is formed between at least parts of surfaces of the friction layer and the electrode layer; and
(5) outputting an electrical signal through the electrode layer and the equipotential source during step (4).

Preferably, in step (4), the friction layer and the electrode layer completely contact each other.

Preferably, in step (4), the external force applied is a continuous external force, the direction of which is periodically reversed, or the magnitude of which is periodically changed.

### Embodiment 1: Preparation of the single-electrode triboelectric nanogenerator

An organic glass plate having sizes of 3 cm in length ×3 cm in width × 1.59 mm in thickness is provided through laser cutting and used as the second support member, and an Al foil is used to completely cover the entire organic glass plate. A nylon film having sizes of 7 cm in length ×3 cm in width ×25 µm in thickness and a polyimide film having sizes of 7 cm in length ×3 cm in width ×127 µm in thickness are stuck together by an adhesive tape. The surface of the nylon film is disposed facing the Al foil, and both ends of the nylon film are fixed to organic glass plate by an adhesive tape. A copper wire is connected with the Al foil and is connected with one end of a resistor, and the other end of the resistor is grounded. Since the polyimide film has good elasticity, it can ensure that the nylon film and the Al foil are completely separated in the absence of pressure. When compressed, the two films can contact with each other. If an external force, such as a click, is applied on the flexible outer films and a corresponding electrical signal is indicated by a voltmeter, then the nanogenerator can convert mechanical energy into electrical energy for power generation.

### Embodiment 2: Preparation of the single-electrode triboelectric nanogenerator set

An organic glass plate having sizes of 10 cm in length ×10 cm in width ×1.59 mm in thickness is provided through laser cutting and used as the second support member, and two Cu films having sizes of 2 cm × 2 cm × 0.5 mm are formed on the organic glass plate. Four high-elastic sponges having a height of 1 mm are adhered around each of the Cu films and are used as the elastic members. Two thin polyester sheets having sizes of 3 cm in length ×3 cm in width ×1 mm in thickness are used as the friction layers and are disposed facing the two Cu films on the second support member, and the other end of the sponge is adhered to the lower surface of the friction layers, such that a similar structure as that shown in Fig. 9 is formed. Each Cu film is connected through a conductive wire to a resistor having one end thereof grounded, thereby a nanogenerator set including two nanogenerators is formed, and the structure of the nanogenerator set is similar to the embodiment shown in Fig. 18. With the high elasticity sponge, the polyester sheet and the Cu film are completely separated in the absence of pressure. When compressed, surfaces of the two can contact each other, and therefore the nanogenerator set can properly operates.

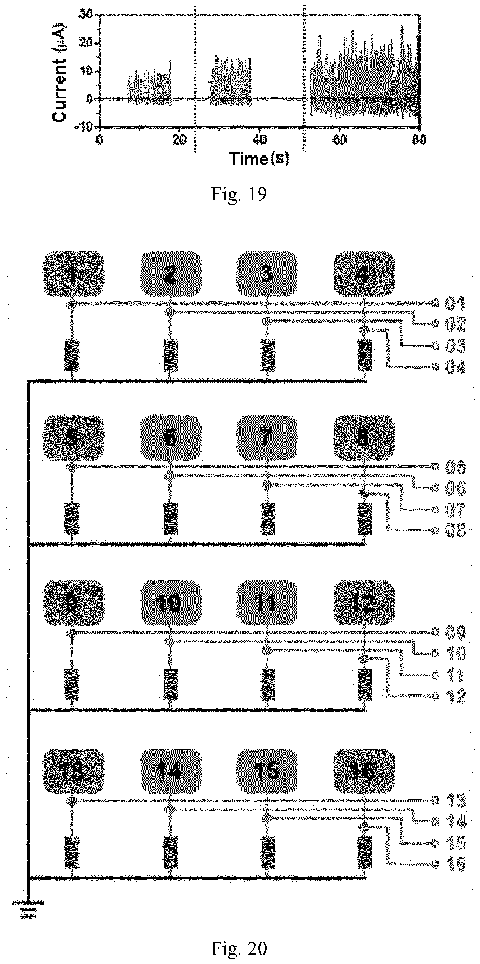

Fig. 19 is a diagram showing a current output when the nanogenerator set is operated, in which a current output information is shown in the left side and in the central part of the diagram when an external force is applied to one nanogenerator of the nanogenerator set, and a current output information is shown in the rightmost side of the diagram when an external force is applied to both nanogenerators. It can be seen that, power generation efficiency can be significantly improved in a manner of the nanogenerator set.

### Embodiments 3: Preparation of single-electrode triboelectric nanogenerator tracking system

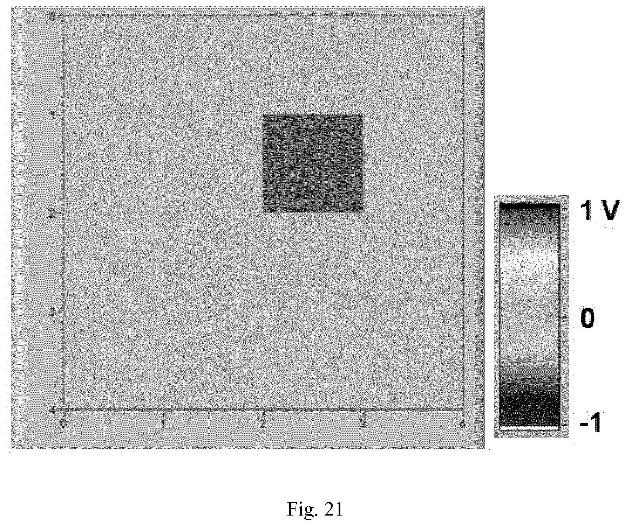

16 triboelectric nanogenerators having the same sizes are manufactured through the method according to Embodiment 1 and are arranged in a 4 × 4 array, and a circuit connection of the whole nanogenerator set is shown in Fig. 20. When an object moves on the tracking system, the object contacts the triboelectric nanogenerators and compresses the nanogenerators and thereby the nanogenerators are caused to output electrical signals. Through sampling these signals, detection to the path along with the object moves can be achieved. This system directly utilizes the triboelectric nanogenerators as sensors that are triggered, and does not need external power supply, such that energy can be effectively saved, and the system can be long-term stably operated. When a nanogenerator is compressed, it can be seen from the data image that the seventh nanogenerator is compressed (Fig. 21).

The above is to merely describe preferred embodiments of the present invention, and does not intend to limit the present invention in any way. Those skilled in the art may make many possible changes and modifications to the technical solutions of the invention or make some equivalent embodiments based on the method and technical contents disclosed herein without departing from the scope of the present invention. Therefore, all changes, equivalents and modifications of the technical solutions of the invention that are made to the above embodiments without departing from the concept of the invention shall fall within the scope of the invention.

## Claims

1. A single-electrode triboelectric nanogenerator, wherein the nanogenerator comprises a friction layer and only one electrode layer, and the electrode layer is disposed facing the friction layer, the electrode layer is electrically connected to an equipotential source, and at least parts of surfaces of the friction layer and the electrode layer are able to contact with and separate from each other under an action of an external force, and at the same time, an electrical signal is output through the electrode layer and the equipotential, wherein, the friction layer and the electrode layer are different in triboelectric polarity sequence.

2. The nanogenerator according to claim 1, **characterized in that**, a material of the friction layer is selected from any one or any combination of polyimide, polyvinyl chloride, polytetrafluoroethylene, polydimethylsiloxane, polypropylene, polyethylene, polystyrene, polyvinylidene chloride, polyetherchloride, polymethyl methacrylate, polyvinyl alcohol, polyester, polyisobutylene, elastic urethane foam, polyvinyl butyral, nylon, polyacrylonitrile, and biphenol polycarbonate.

3. The nanogenerator according to claim 1 or 2, **characterized in that**, a microstructure of a micron magnitude or a submicron magnitude is distributed on parts or all of the surface of the friction layer facing the electrode layer and/or the surface of the electrode layer facing the friction layer.

4. The nanogenerator according to any one of claims 1 to 3, **characterized in that**, the surface of the friction layer facing the electrode layer and/or the surface of the electrode layer facing the friction layer are chemical modified, such that a functional group that is easy to obtain electrons is introduced to one surface of the two surfaces that is relative negative in the triboelectric polarity sequence, and/or a functional group that is easy to lose electrons is introduced to the other surface of the two surfaces that is relative positive in the triboelectric polarity sequence.

5. The nanogenerator according to any one of claims 1 to 4, **characterized in that**, the friction layer and/or the electrode layer is made of a hard material or a flexible material.

6. The nanogenerator according to any one of claims 1 to 5, **characterized in that**,
when the friction layer and the electrode layer are separated from each other, a maximum interval between contacting surfaces of the friction layer and the electrode layer is comparative to or larger than a length and a width of the contacting surfaces of the friction layer and the electrode layer.

7. The nanogenerator according to claim 6, **characterized in that**, a ratio between the maximum interval and the length of the contacting surfaces and a ratio between the maximum interval and the width of the contacting surfaces are in a range from 1 to 100.

8. The nanogenerator according to any one of claims 1 to 7, **characterized in that**, the equipotential source is provided through grounding.

9. The nanogenerator according to any one of claims 1 to 8, **characterized in that**, the nanogenerator further comprises a load, and the electrode is electrically connected to the equipotential source through the load.

10. The nanogenerator according to any one of claims 1 to 8, **characterized in that**, the electrical connection is realized through an external circuit that needs to be powered.

11. The nanogenerator according to any one of claims 1 to 10, **characterized in that**,
when no external force is applied, at least parts of the surfaces of the friction layer and the electrode layer are separated, and when an external force is applied, at least parts of the surfaces of the friction layer and the electrode layer contact with each other; or
when no external force is applied, at least parts of the surfaces of the friction layer and the electrode layer contact with each other, and when an external force is applied, at least parts of the surfaces of the friction layer and the electrode layer are separated.

12. The nanogenerator according to any one of claims 1 to 11, **characterized in that**, the nanogenerator further comprises an elastic member, and at least parts of the surfaces of the friction layer and the electrode layer are separated from or contact with each other by the elastic member when no external force is applied.

13. The nanogenerator according to claim 12, **characterized in that**, two or more elastic members are provided, and the elastic members have tensile elasticity or bending elasticity.

14. The nanogenerator according to any one of claims 1 to 13, **characterized in that**, the nanogenerator further comprises a first support member and/or a second support member, the first support member is fixed to a surface of the friction layer away from the electrode layer, and the second support member is fixed to a surface of the electrode layer away from the friction layer.

15. The nanogenerator according to claim 14, **characterized in that**, one end of the elastic member is fixed to the first support member and is arranged around the friction layer, and/or the other end of the elastic member is fixed to the second support member and is arranged around the electrode layer.

16. The nanogenerator according to claim 14 or 15, **characterized in that**, the first support member and/or the second support member is configured to have a flat plate structure or a curved structure.

17. The nanogenerator according to any one of claims 14 to 16, **characterized in that**, the first support member and the second support member are in parallel with each other, or one end of the first support member joins one end of the second support member.

18. The nanogenerator according to any one of claims 1 to 13, **characterized in that**, a cavity is formed between the friction layer and the electrode layer, the friction layer and/or the electrode layer has a curved shape bulging outwards in a direction away from the cavity, such that when an external force is applied, at least parts of the surfaces of the friction layer and the electrode layer can contact with each other, and when the external force is removed, the friction layer and the electrode layer restore to their original shapes; and
the friction layer and/or the electrode layer has bending elasticity.

19. The nanogenerator according to claim 18, **characterized in that**, the friction layer and the electrode layer are connected with each other at their edges.

20. The nanogenerator according to claim 19, **characterized in that**, the friction layer is curved and bulges outwards away from the cavity, the electrode layer is plane, and a size of the friction layer is smaller than that a size of the electrode layer.

21. A single-electrode triboelectric nanogenerator set, **characterized in that**, the nanogenerator set comprises two or more nanogenerators according to any one of claims 1 to 20 connected in parallel, and electrical signals output from the nanogenerators are monitored separately or unifiedly.

22. The nanogenerator set according to claim 21, **characterized in that**, the two or more nanogenerators are superposed together in the longitudinal direction to form the nanogenerator set.

23. The nanogenerator set according to claim 22, **characterized in that**, two adjacent nanogenerators are securely connected through an insulating layer.

24. The nanogenerator set according to claim 22, **characterized in that**, two adjacent nanogenerators share a common electrode layer.

25. The nanogenerator set according to claim 24, **characterized in that**, as compared with the friction layers in the two adjacent nanogenerators, the common electrode layer tends to lose electrons.

26. The nanogenerator set according to claim 21, **characterized in that**, the two or more nanogenerators are arranged side by side to form the nanogenerator set.

27. The nanogenerator set according to claim 26, **characterized in that**, all the nanogenerators share a common electrode layer, and all the friction layers are located at the same side of the common electrode layer.

28. A power generation method, **characterized in that** the nanogenerator according to any one of claims 1 to 20 or the nanogenerator set according to any one of claims 21 to 27 is utilized, the method comprises steps of:
(1) providing the friction layer,
(2) providing the electrode layer,
(3) forming an electrical connection between the electrode layer and an equipotential source;
(4) applying an external force such that at least one contact-and-separation cycle is formed between at least parts of surfaces of the friction layer and the electrode layer; and
(5) outputting an electrical signal through the electrode layer and the equipotential source during step (4).

29. The power generation method according to 28, **characterized in that**, the external force applied in step (4) is a continuous external force, the direction of which is periodically reversed, or the magnitude of which is periodically changed.

30. A tracking system based on single-electrode triboelectric nanogenerators, **characterized in that**, the tracking system comprises two or more nanogenerators according to any one of claims 1 to 20, the friction layer or the electrode layer of each nanogenerator is disposed facing upwards on a surface on which an object to be tracked moves, and at least parts of the surfaces of the friction layer and the electrode layer can contact each other under the pressure of the object to be tracked and can restore to their original shapes after the object to be tracked has left, and electrical signals output from each of the nanogenerators are separately monitored.

## Patentansprüche

1. Triboelektrischer Einzelelektroden-Nanogenerator, wobei der Nanogenerator eine Reibungsschicht und nur eine Elektrodenschicht umfasst und die Elektrodenschicht so angeordnet ist, dass sie der Reibungsschicht zugewandt ist, die Elektrodenschicht elektrisch mit einer Äquipotentialquelle verbunden ist und zumindest Teile von Flächen der Reibungsschicht und der Elektrodenschicht einander kontaktieren und sich voneinander unter der Wirkung einer externen Kraft trennen können, und gleichzeitig wird ein elektrisches Signal durch die Elektrodenschicht und das Äquipotential ausgegeben, wobei die Reibungsschicht und die Elektrodenschicht sich in ihrer triboelektrischen Polaritätssequenz unterscheiden.

2. Nanogenerator nach Anspruch 1, **dadurch gekennzeichnet, dass** ein Material der Reibungsschicht aus einem der folgenden oder einer Kombination derselben ausgewählt wird: Polyimid, Polyvinylchlorid, Polytetrafluorethylen, Polydimethylsiloxan, Polypropylen, Polyethylen, Polystyrol, Polyvinylidenchlorid, Polyetherchlorid, Polymethylmethacrylat, Polyvinylalcohol, Polyester, Polyisobutylen, Elastischer Urethanschaum, Polyvinylbutyral, Nylon, Polyacrylnitril und Biphenolpolycarbonat.

3. Nanogenerator nach Anspruch 1 oder 2, **dadurch gekennzeichnet, dass** eine Mikrostruktur von Mikrometergröße oder Submikrometergröße auf Teile oder die ganze Oberfläche der Reibungsschicht verteilt ist, die der Elektrodenschicht gegenüberliegt, und/oder auf die Oberfläche der Elektrodenschicht, die der Reibungsschicht gegenüberliegt.

4. Nanogenerator nach einem der Ansprüche 1 bis 3, **dadurch gekennzeichnet, dass** die Oberfläche der Reibungsschicht, die der Elektrodenschicht gegenüberliegt, und/oder die Oberfläche der Elektrodenschicht, die der Reibungsschicht gegenüberliegt, chemisch derart modifiziert sind, dass eine funktionelle Gruppe, die leicht Elektronen aufnehmen kann, in eine Oberfläche der zwei Oberflächen eingeführt wird, die relativ negativ in der triboelektrischen Polaritätssequenz ist, und/oder eine funktionelle Gruppe, die leicht Elektronen verlieren kann, in die andere der Oberflächen eingeführt wird, die relativ positiv in der triboelektrischen Polaritätssequenz ist.

5. Nanogenerator nach einem der Ansprüche 1 bis 4, **dadurch gekennzeichnet, dass** die Reibungsschicht und/oder die Elektrodenschicht aus einem harten Material oder einem flexiblen Material hergestellt ist.

6. Nanogenerator nach einem der Ansprüche 1 bis 5, **dadurch gekennzeichnet, dass** wenn die Reibungsschicht und die Elektrodenschicht voneinander getrennt werden, ein maximales Intervall zwischen Kontaktflächen der Reibungsschicht und der Elektrodenschicht vergleichbar mit oder größer als eine Länge und eine Breite der Kontaktflächen der Reibungsschicht und der Elektrodenschicht ist.

7. Nanogenerator nach Anspruch 6, **dadurch gekennzeichnet, dass** ein Verhältnis zwischen dem maximalen Intervall und der Länge der Kontaktflächen und ein Verhältnis zwischen dem maximalen Intervall und der Breite der Kontaktflächen in einem Bereich von 1 zu 100 sind.

8. Nanogenerator nach einem der Ansprüche 1 bis 7, **dadurch gekennzeichnet, dass** die Äquipotentialquelle durch Erdung vorgesehen ist.

9. Nanogenerator nach einem der Ansprüche 1 bis 8, **dadurch gekennzeichnet, dass** der Nanogenerator ferner eine Last umfasst, und die Elektrode elektrisch mit der Äquipotentialquelle durch die Last verbunden ist.

10. Nanogenerator nach einem der Ansprüche 1 bis 8, **dadurch gekennzeichnet, dass** die elektrische Verbindung durch eine externe Schaltung realisiert ist, die eine Zufuhr von Strom benötigt.

11. Nanogenerator nach einem der Ansprüche 1 bis 10, **dadurch gekennzeichnet, dass**
wenn keine externe Kraft ausgeübt wird, werden zumindest Teile der Oberflächen der Reibungsschicht und der Elektrodenschicht getrennt, und wenn eine externe Kraft ausgeübt wird, kontaktieren zumindest Teile der Oberflächen der Reibungsschicht und der Elektrodenschicht einander; oder
wenn keine externe Kraft ausgeübt wird, kontaktieren zumindest Teile der Oberflächen der Reibungsschicht und der Elektrodenschicht einander, und wenn eine externe Kraft ausgeübt wird, werden zumindest Teile der Oberflächen der Reibungsschicht und der Elektrodenschicht getrennt.

12. Nanogenerator nach einem der Ansprüche 1 bis 11, **dadurch gekennzeichnet, dass** der Nanogenerator ferner ein elastisches Element umfasst, und zumindest Teile der Oberflächen der Reibungsschicht und der Elektrodenschicht werden voneinander getrennt oder kontaktieren einander durch das elastische Element, wenn keine externe Kraft ausgeübt wird.

13. Nanogenerator nach Anspruch 12, **dadurch gekennzeichnet, dass** zwei oder mehr elastische Elemente vorgesehen sind und die elastischen Elemente Zugelastizität oder Biegeelastizität haben.

14. Nanogenerator nach einem der Ansprüche 1 bis 13, **dadurch gekennzeichnet, dass** der Nanogenerator ferner ein erstes Stützelement und/oder ein zweites Stützelement umfasst, das erste Stützelement ist an einer Fläche der Reibungsschicht fern von der Elektrodenschicht befestigt, und das zweite Stützelement ist an einer Fläche der Elektrodenschicht fern von der Reibungsschicht befestigt.

15. Nanogenerator nach Anspruch 14, **dadurch gekennzeichnet, dass** ein Ende des elastischen Elementes am ersten Stützelement befestigt und rund um die Reibungsschicht angeordnet ist, und/oder das andere Ende des elastischen Elementes ist am zweiten Stützelement befestigt und ist rund um die Elektrodenschicht angeordnet.

16. Nanogenerator nach Anspruch 14 oder 15, **dadurch gekennzeichnet, dass** das erste Stützelement und/oder das zweite Stützelement dafür ausgelegt ist, eine flache Plattenstruktur oder eine gekrümmte Struktur zu haben.

17. Nanogenerator nach einem der Ansprüche 14 bis 16, **dadurch gekennzeichnet, dass** das erste Stützelement und das zweite Stützelement parallel zueinander sind oder ein Ende des ersten Stützelementes sich mit einem Ende des zweiten Stützelementes verbindet.

18. Nanogenerator nach einem der Ansprüche 1 bis 13, **dadurch gekennzeichnet, dass** ein Hohlraum zwischen der Reibungsschicht und der Elektrodenschicht gebildet ist, die Reibungsschicht und/oder die Elektrodenschicht eine gekrümmte Form hat, die sich nach außen in eine Richtung weg vom Hohlraum wölbt, derart dass, wenn eine externe Kraft ausgeübt wird, zumindest Teile der Oberflächen der Reibungsschicht und der Elektrodenschicht einander kontaktieren können, und wenn die externe Kraft entfernt wird, stellen die Reibungsschicht und die Elektrodenschicht ihre ursprünglichen Formen wieder her; und
die Reibungsschicht und/oder die Elektrodenschicht hat Biegeelastizität.

19. Nanogenerator nach Anspruch 18, **dadurch gekennzeichnet, dass** die Reibungsschicht und die Elektrodenschicht miteinander an ihren Kanten verbunden sind.

20. Nanogenerator nach Anspruch 19, **dadurch gekennzeichnet, dass** die Reibungsschicht gekrümmt ist und sich nach außen weg vom Hohlraum wölbt, die Elektrodenschicht ist eben, und eine Größe der Reibungsschicht ist kleiner als eine Größe der Elektrodenschicht.

21. Triboelektrisches Einzelelektroden-Nanogeneratorset, **dadurch gekennzeichnet, dass** das Nanogeneratorset zwei oder mehr Nanogeneratoren nach einem der Ansprüche 1 bis 20 umfasst, die parallel geschaltet sind, und elektrische Signale, die von den Nanogeneratoren ausgegeben werden, werden separat oder vereint überwacht.

22. Nanogeneratorset nach Anspruch 21, **dadurch gekennzeichnet, dass** die zwei oder mehr Nanogeneratoren in der Längsrichtung aneinander gelegt sind, um das Nanogeneratorset zu bilden.

23. Nanogeneratorset nach Anspruch 22, **dadurch gekennzeichnet, dass** zwei benachbarte Nanogeneratoren sicher miteinander durch eine Isolierschicht verbunden sind.

24. Nanogeneratorset nach Anspruch 22, **dadurch gekennzeichnet, dass** zwei benachbarte Nanogeneratoren sich eine gemeinsame Elektrodenschicht teilen.

25. Nanogeneratorset nach Anspruch 24, **dadurch gekennzeichnet, dass** beim Vergleich mit den Reibungsschichten in den zwei benachbarten Nanogeneratoren die gemeinsame Elektrodenschicht dazu neigt, Elektronen zu verlieren.

26. Nanogeneratorset nach Anspruch 21, **dadurch gekennzeichnet, dass** die zwei oder mehr Nanogeneratoren in der Längsrichtung Seite an Seite angeordnet sind, um das Nanogeneratorset zu bilden.

27. Nanogeneratorset nach Anspruch 26, **dadurch gekennzeichnet, dass** alle Nanogeneratoren eine gemeinsame Elektrodenschicht teilen und alle Reibungsschichten sich auf derselben Seite der gemeinsamen Elektrodenschicht befinden.

28. Energieerzeugungsverfahren, **dadurch gekennzeichnet, dass** der Nanogenerator nach einem der Ansprüche 1 bis 20 oder das Nanogeneratorset nach einem der Ansprüche 21 bis 27 verwendet wird, wobei das Verfahren die folgenden Schritte umfasst:
(1) Bereitstellen der Reibungsschicht,
(2) Bereitstellen der Elektrodenschicht,
(3) Bilden einer elektrischen Verbindung zwischen der Elektrodenschicht und einer Äquipotentialquelle;
(4) Ausüben einer externen Kraft derart, dass mindestens ein Kontakt-und-Trennungs-Zyklus zumindest zwischen Teilen der Oberflächen der Reibungsschicht und der Elektrodenschicht gebildet wird; und
(5) Ausgeben eines elektrischen Signals durch die Elektrodenschicht und die Äquipotentialquelle während des Schrittes (4).

29. Energieerzeugungsverfahren nach Anspruch 28, **dadurch gekennzeichnet, dass** die externe Kraft, die in Schritt (4) ausgeübt wird, eine kontinuierliche externe Kraft ist, deren Richtung periodisch umgekehrt wird oder deren Größe periodisch geändert wird.

30. Tracking-System, das auf triboelektrischen Einzelelektroden-Nanogeneratoren beruht, **dadurch gekennzeichnet, dass** das Tracking-System zwei oder mehr Nanogeneratoren nach einem der Ansprüche 1 bis 20 umfasst, die Reibungsschicht oder die Elektrodenschicht jedes Nanogenerators so angeordnet ist, dass sie nach oben auf eine Oberfläche weist, auf der sich ein Objekt, das verfolgt werden soll, bewegt, und zumindest Teile der Oberflächen der Reibungsschicht und der Elektrodenschicht können einander unter dem Druck des Objektes, das verfolgt werden soll, kontaktieren und können zu ihren Originalformen zurückkehren, nachdem das Objekt, das verfolgt werden soll, weggegangen ist, und elektrische Signale, die von jedem der Nanogeneratoren ausgegeben werden, separat überwacht werden.

## Revendications

1. Nanogénérateur triboélectrique à une seule électrode, dans lequel le nanogénérateur comprend une couche de frottement et une seule couche d'électrode, et la couche d'électrode est disposée en face de la couche de frottement, la couche d'électrode est connectée électriquement à une source d'équipotentiel, et au moins des parties des surfaces de la couche de frottement et de la couche d'électrode sont capables de venir en contact mutuel et de se séparer les unes des autres sous l'action d'une force externe et, en même temps, un signal électrique est délivré en sortie par l'intermédiaire de la couche d'électrode et de l'équipotentiel, dans lequel la couche de frottement et la couche d'électrode ont des séquences de polarité triboélectrique différentes.

2. Nanogénérateur selon la revendication 1, **caractérisé en ce qu'**un matériau de la couche de frottement est choisi parmi l'un quelconque ou n'importe quelle combinaison parmi : polyimide, poly(chlorure de vinyle), polytétrafluoroéthylène, polydiméthylsiloxane, polypropylène, polyéthylène, polystyrène, poly(chlorure de vinylidène), poly(chlorure d'éther), poly(méthacrylate de méthyle), poly(alcool vinylique), polyester, polyisobutylène, mousse d'uréthane élastique, poly(butyral de vinyle), nylon, polyacrylonitrile, et poly(carbonate de biphénol).

3. Nanogénérateur selon la revendication 1 ou 2, **caractérisé en ce qu'**une microstructure ayant une amplitude micronique ou une amplitude sous-micronique est distribuée sur des parties ou sur toute la surface de la couche de frottement faisant face à la couche d'électrode et/ou la surface de la couche d'électrode faisant face à la couche de frottement.

4. Nanogénérateur selon l'une quelconque des revendications 1 à 3, **caractérisé en ce que** la surface de la couche de frottement faisant face à la couche d'électrode et/ou la surface de la couche d'électrode faisant face à la couche de frottement sont modifiées chimiquement, de façon qu'un groupe fonctionnel obtenant facilement des électrons soit introduits sur une surface des deux surfaces qui est relativement négative dans la séquence de polarité triboélectrique, et/ou un groupe fonctionnel perdant facilement des électrons est introduit sur l'autre surface des deux surfaces qui est relativement positive dans la séquence de polarité triboélectrique.

5. Nanogénérateur selon l'une quelconque des revendications 1 à 4, **caractérisé en ce que** la couche de frottement et/ou la couche d'électrode est faite en un matériau dur ou en un matériau flexible.

6. Nanogénérateur selon l'une quelconque des revendications 1 à 5, **caractérisé en ce que**, lorsque la couche de frottement et la couche d'électrode sont séparées l'une de l'autre, l'intervalle maximal entre les surfaces de contact de la couche de frottement et la couche d'électrode est comparable ou supérieur à la longueur et à la largeur des surfaces de contact de la couche de frottement et de la couche d'électrode.

7. Nanogénérateur selon la revendication 6, **caractérisé en ce que** le rapport entre l'intervalle maximal et la longueur des surfaces de contact et le rapport entre l'intervalle maximal et la largeur des surfaces de contact sont situés dans la plage allant de 1 à 100.

8. Nanogénérateur selon l'une quelconque des revendications 1 à 7, **caractérisé en ce que** la source d'équipotentiel est fournie par mise à la terre.

9. Nanogénérateur selon l'une quelconque des revendications 1 à 8, **caractérisé en ce que** le nanogénérateur comprend en outre une charge, et l'électrode est connectée électriquement à la source d'équipotentiel par l'intermédiaire de la charge.

10. Nanogénérateur selon l'une quelconque des revendications 1 à 8, **caractérisé en ce que** la connexion électrique est réalisée par l'intermédiaire d'un circuit externe qui a besoin d'être alimenté.

11. Nanogénérateur selon l'une quelconque des revendications 1 à 10, **caractérisé en ce que**
lorsqu'aucune force externe n'est appliquée, au moins des parties des surfaces de la couche de frottement et de la couche d'électrode sont séparées, et lorsqu'une force externe est appliquée, au moins des parties des surfaces de la couche de frottement et de la couche d'électrode entrent en contact mutuel ; ou
lorsqu'aucune force externe n'est appliquée, au moins des parties des surfaces de la couche de frottement et de la couche d'électrode entrent en contact mutuel, et lorsqu'une force externe est appliquée, au moins des parties des surfaces de la couche de frottement et de la couche d'électrode sont séparées.

12. Nanogénérateur selon l'une quelconque des revendications 1 à 11, **caractérisé en ce que** le nanogénérateur comprend en outre un élément élastique, et au moins des parties des surfaces de la couche de frottement et de la couche d'électrode sont séparées ou viennent en contact mutuel du fait de l'élément élastique quand aucune force externe n'est appliquée.

13. Nanogénérateur selon la revendication 12, **caractérisé en ce que** deux ou plusieurs éléments élastiques sont présents, et les éléments élastiques ont une élasticité en tension ou une élasticité en flexion.

14. Nanogénérateur selon l'une quelconque des revendications 1 à 13, **caractérisé en ce que** le nanogénérateur comprend en outre un premier élément de support et/ou un deuxième élément de support, le premier élément de support est fixé à une surface de la couche de frottement à distance de la couche d'électrode, et le deuxième élément de support est fixé à une surface de la couche d'électrode à distance de la couche de frottement.

15. Nanogénérateur selon la revendication 14, **caractérisé en ce qu'**une extrémité de l'élément élastique est fixée au premier élément de support et est agencée autour de la couche de frottement, et/ou l'autre extrémité de l'élément élastique est fixée au deuxième élément de support et est agencée autour de la couche d'électrode.

16. Nanogénérateur selon la revendication 14 ou 15, **caractérisé en ce que** le premier élément de support et/ou le deuxième élément de support est configuré de manière à avoir une structure de plaque plate ou une structure incurvée.

17. Nanogénérateur selon l'une quelconque des revendications 14 à 16, **caractérisé en ce que** le premier élément de support et le deuxième élément de support sont mutuellement parallèles, ou bien une extrémité du premier élément de support joint une extrémité du deuxième élément de support.

18. Nanogénérateur selon l'une quelconque des revendications 1 à 13, **caractérisé en ce qu'**une cavité est formée entre la couche de frottement et la couche d'électrode, la couche de frottement et/ou la couche d'électrode a une forme incurvée qui est bombée vers l'extérieur dans une direction à distance de la cavité, de façon que, lorsqu'une force externe est appliquée, au moins des parties des surfaces de la couche de frottement et de la couche d'électrode puissent venir en contact mutuel, et lorsque la force externe est retirée, la couche de frottement et la couche d'électrode reviennent à leurs formes originales ; et
la couche de frottement et/ou la couche d'électrode a une élasticité en flexion.

19. Nanogénérateur selon la revendication 18, **caractérisé en ce que** la couche de frottement et la couche d'électrode sont connectées l'une à l'autre au niveau de leurs bords.

20. Nanogénérateur selon la revendication 19, **caractérisé en ce que** la couche de frottement est incurvée et est bombée vers l'extérieur à distance de la cavité, la couche d'électrode est plane, et la taille de la couche de frottement est inférieure à la taille de la couche d'électrode.

21. Ensemble de nanogénérateurs triboélectriques à une seule électrode, **caractérisé en ce que** l'ensemble de nanogénérateurs comprend deux ou plusieurs nanogénérateurs selon l'une quelconque des revendications 1 à 20 connectés en parallèle, et des signaux électriques délivrés en sortie à partir des nanogénérateurs sont surveillés séparément ou de manière unifiée.

22. Ensemble de nanogénérateurs selon la revendication 21, **caractérisé en ce que** les deux ou plusieurs nanogénérateurs sont superposés ensemble dans la direction longitudinale pour former l'ensemble de nanogénérateurs.

23. Ensemble de nanogénérateurs selon la revendication 22, **caractérisé en ce que** deux nanogénérateurs adjacents sont connectés fermement par l'intermédiaire d'une couche isolante.

24. Ensemble de nanogénérateurs selon la revendication 22, **caractérisé en ce que** deux nanogénérateurs adjacents partagent une couche d'électrode commune.

25. Ensemble de nanogénérateurs selon la revendication 24, **caractérisé en ce que**, en comparaison avec les couches de frottement dans les deux nanogénérateurs adjacents, la couche d'électrode commune a tendance à perdre des électrons.

26. Ensemble de nanogénérateurs selon la revendication 21, **caractérisé en ce que** les deux ou plusieurs nanogénérateurs sont agencés côte à côte pour former l'ensemble de nanogénérateurs.

27. Ensemble de nanogénérateurs selon la revendication 26, **caractérisé en ce que** tous les nanogénérateurs partagent une couche d'électrode commune, et toutes les couches de frottement sont situées du même côté de la couche d'électrode commune.

28. Procédé de génération d'énergie électrique, **caractérisé en ce que** le nanogénérateur selon l'une quelconque des revendications 1 à 20 ou le jeu de nanogénérateurs selon l'une quelconque des revendications 21 à 27 est utilisé, le procédé comprenant les étapes suivantes :
(1) fournir la couche de frottement,
(2) fournir la couche d'électrode,
(3) former une connexion électrique entre la couche d'électrode et une source d'équipotentiel ;
(4) appliquer une force externe de façon qu'au moins un cycle de contact et de séparation soit formé entre au moins des parties des surfaces de la couche de frottement et de la couche d'électrode ; et
(5) délivrer en sortie un signal électrique par l'intermédiaire de la couche d'électrode et de la source d'équipotentiel durant l'étape (4).

29. Procédé de génération d'énergie électrique selon la revendication 28, **caractérisé en ce que** la force externe appliquée dans l'étape (4) est une force externe continue, dont la direction est périodiquement inversée, ou dont l'amplitude est périodiquement changée.

30. Système de pistage basé sur des nanogénérateurs triboélectriques à une seule électrode, **caractérisé en ce que** le système de poursuite comprend deux ou plusieurs nanogénérateurs selon l'une quelconque des revendications 1 à 20, la couche de frottement ou la couche d'électrode de chaque nanogénérateur est disposée vers le haut sur une surface sur laquelle un objet devant être pisté se déplace, et au moins des parties des surfaces de la couche de frottement et de la couche d'électrode peuvent venir en contact mutuel sous la pression de l'objet devant être pisté et peuvent revenir à leurs formes originales après que l'objet devant être pisté est parti, et des signaux électriques délivrés en sortie par chacun des nanogénérateurs sont surveillés séparément.
